# EUROPEAN PATENT APPLICATION

(11) **EP 2 685 016 A1**
(43) Date of publication of application: **15.01.2014**
(21) Application number: 12176030.0
(22) Date of filing: 11.07.2012
(51) Int. Cl.: E03F 5/042

(54) **Shut-off device and drain with such a device**

(71) Applicant: Planet Patent S.A., 1746 Luxembourg (LU)
(72) Inventor: Kovács, József, H-1055 Budapest (HU)
(74) Representative: Kovari, Zoltan

(57) **Abstract**

The invention relates to a shut-off device (100) especially for sewage drains, characterised in that the device has an inlet fitting piece (4, 167) and a dual valve system (200), the inlet fitting piece (4, 167) comprises a valve seat (10, 178), the first valve of the dual valve system (200) is a clack valve (9, 168) that is rotateably mounted on the inlet fitting piece (4, 167) above the valve seat (10, 178) such that the clack valve (9, 16) rests in an inclined or vertical position against the valve seat (10, 178) in the rest position, the dual valve system (200) further comprises a flexible shut-off valve (11, 169) comprising a flexible material (11 a) having a larger surface than an upper surface (9a) of the clack valve (9), a lower side (11d) of the flexible material (11a) is provided with auxiliary weight (18) and the upper side (11 b) of the flexible material (11 a) is affixed to the inlet fitting piece (4, 167) above the clack valve (9, 168) whereby the lower side (11 d) of the flexible material (11 a) provided with the auxiliary weight (18) hangs down from the clack valve (9, 168) and biases the clack valve (9, 168) towards the rest position.

The invention further relates to a drain shaft assembly (300) comprising a drain shaft (302) being in communication with a sewage drain (304) and an upper drain shaft opening (306) being in communication with the outside (308), characterised by comprising a shut-off device (100) according to the invention.

## Description

The present invention relates to a shut-off device especially for sewage drains. The invention further relates to a drain shaft assembly comprising a drain shaft that is in communication with a sewage drain and an upper drain shaft opening that is in communication with the outside, which drain shaft assembly comprises a shut-off device according to the invention.

Drain shafts leading to sewage drains are generally covered by grates or other covers having through holes in order to allow rain water and waste water to enter the sewage drain system. The currently existing drain shafts have many problems. One of the problems associated with prior art sewage drain shafts is that the grates or other drain shaft covers employed therein are not capable of stopping odours and harmful gasses from escaping into the outside which can be disturbing or even dangerous for pedestrians and animals passing by the drain shaft. Certain gasses and gaseous chemicals generated in the sewage drains can be harmful for the environment as well, in particularly for the atmosphere. The grates are also unable to stop smaller rodents and insects from coming out of the sewage drains which may even cause epidemic danger. A further problem is that rain water or other waste water often washes down sludge, debris or other objects that can cause blockage, and the existing sewage drains are difficult to clean in such situations. It is also a problem that oil and similar non-environment friendly materials are also washed down the drain shafts which increases the costs of sewage water purification and recycling. A further disadvantage of the existing drain shafts is that they are not suitable for retaining swelling sewage water e.g. due to heavy rains or blockage within the sewage drain system. The swelling water may burst into the outside, in which case the outside must be disinfected afterwards.

It is a further deficiency of existing sewage drain shafts that there are no means provided therein that would be adapted to extract smog and dust pollution occurring on road surfaces above the drain shaft openings.

Hungarian Patent P0800360 discloses an odour interception device for drain systems which comprises a new shutting system which also employs protection against burning cigarettes. However, in autumn when the leaves fall the devices becomes blocked by the fallen leaves due to the burning cigarette protection which is an integral part of the device, hence the draining does not work until cleaning. Furthermore, it has a single shutting valve system; it does not contain a rat trap and an anti-swell valve to protect the system against gully swells. Moreover, the flexible valve has to be readjusted manually after each gully swell.

It is an object of the present invention to overcome the problems associated with the prior art.

The above objects are achieved by a shut-off device according to claim 1.

In a second aspect of the invention the above objects are achieved by a drain shaft assembly according to claim 8.

Particularly advantageous embodiments of the invention are defined in the attached dependent claims.

Further details of the invention will be apparent from the accompanying figures and exemplary embodiments.

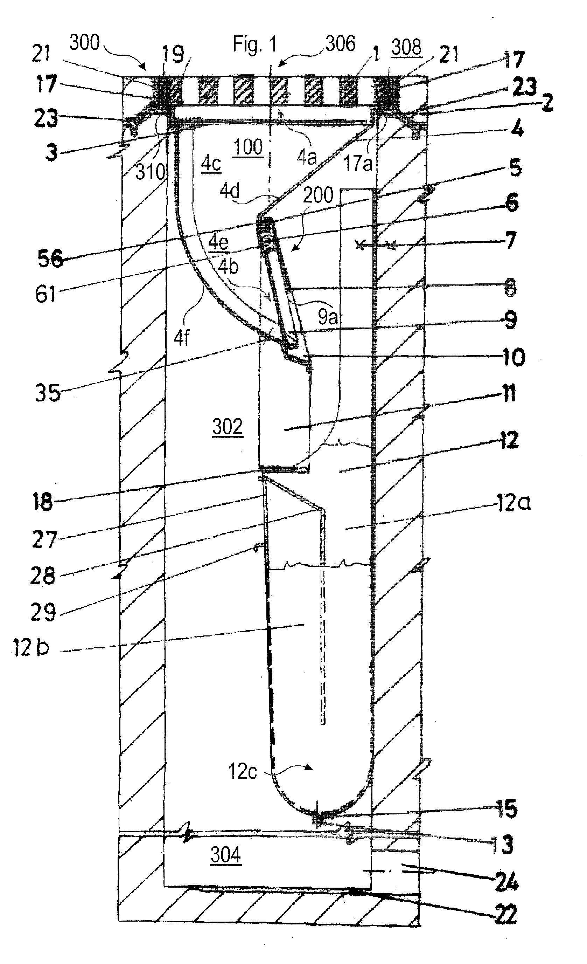

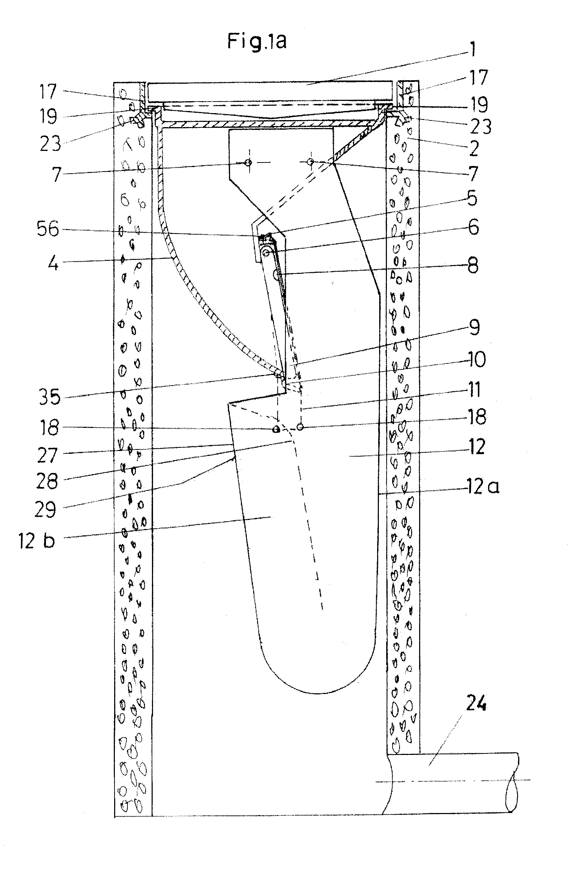

Fig. 1 is a cross-sectional side-view of an exemplary embodiment of the drain shaft assembly according to the invention wherein the dual valve system of the shut-off device is in the closed position.
Fig. 1 a is a cross-sectional side-view of an alternative to the embodiment depicted in Fig. 1 wherein the collector tank is affixed to the inlet fitting piece.
Fig 2 is a cross-sectional front view of the drain shaft assembly of Fig. 1 wherein the flexible valve has been removed in order to better show the position of the opening force controller.
Fig. 3 is a cross-sectional side-view of the drain shaft assembly of Fig. 1 wherein the dual valve system of the shut-off device is in the open position.
Fig. 4 is a cross-sectional front view of the drain shaft assembly of Fig. 1 in the open position wherein the flexible valve and the opening force controller have been removed.
Fig. 5a is the cross sectional side view of the U-shaped collector tank according to Fig. 1.
Fig 5b is the front view of the collector tank according to Fig. 5a.
Fig. 5c is the cross sectional front and top view of the outlet of the collector tank according to Fig. 5a.
Fig. 5d is a side view of the vacuum relief end-plug.
Fig. 5e is a bottom view of the collector tank according to Fig. 5a.
Fig. 5f is an enlarged view of the mounting bore-hole of Fig. 5b.
Fig. 5g is the cross sectional side view of the U-shaped collector tank according to Fig. 1a.
Fig 5h is the front view of the collector tank according to Fig. 5g.
Fig. 6a is a cross sectional side view of an exemplary grate.
Fig. 6b is a top plan view of the grate according to Fig. 6a.
Fig. 6c is a side view of a screw stud employed in the grate according to Fig. 6a.
Fig. 6d is a top view of a screw stud employed in the grate according to Fig. 6a.
Fig. 7a is a front view of the inlet fitting piece and the clack valve seat according to Fig. 1.
Fig. 7b is a side view of the inlet fitting piece according to Fig. 7a.
Fig. 7c is a top view of the inlet fitting piece according to Fig. 7a.
Fig. 7d is a cross sectional view taken along line A-A of Fig. 7b.
Fig. 8 is an enlarged view of Fig. 7b showing the supporting profile of the flexible valve.
Fig. 9a is a front view of the inlet fitting piece and the clack valve according to Fig. 1.
Fig. 9b is a side view of the inlet fitting piece with clack valve according to Fig. 9a.
Fig. 9c is an enlarged view of Fig. 9b showing the mounting of the clack valve below the supporting profile.
Fig. 10 is a front view of the inlet fitting piece and the clack valve in the open position according to Fig. 3.
Fig. 11 is a side view of the inlet fitting piece with clack valve in the open position according to Fig. 10.
Fig. 12a is front view of the clack valve according to Fig. 1.
Fig. 12b is a side view of the clack valve according to Fig. 1.
Fig. 13a is a schematic top view of an exemplary fine grill.
Fig. 13b is a side view of the fine grill according to Fig. 13a.
Fig. 14a is a side view of an exemplary inlet fitting piece provided for a circular drain shaft.
Fig. 14b is a top view of a grate covering the circular drain shaft according to Fig. 14a.
Fig. 14c is the other side view of the inlet fitting piece according to Fig. 14a.
Fig. 14d is a front view of the inlet fitting piece according to Fig. 14a.
Fig. 14e is a top view of the inlet fitting piece according to Fig. 14a.
Fig. 14f is an enlarged view of Fig. 14c showing the mounting of the clack valve, the opening force controller and the flexible shut-off valve.
Fig. 15a is a side view of another exemplary inlet fitting piece provided for a circular drain shaft.
Fig. 15b is a top view of a grate covering the circular drain shaft according to Fig. 15a.
Fig. 15c is the other side view of the inlet fitting piece of Fig. 15a depicted in the open position.
Fig. 15d is a front view of the inlet fitting piece according to Fig. 15a.
Fig. 15e is a top view of the inlet fitting piece according to Fig. 15a.
Fig. 16 is a front view of an exemplary opening force controller.
Fig. 17 is a front view of an unfolded flexible valve according to the invention.

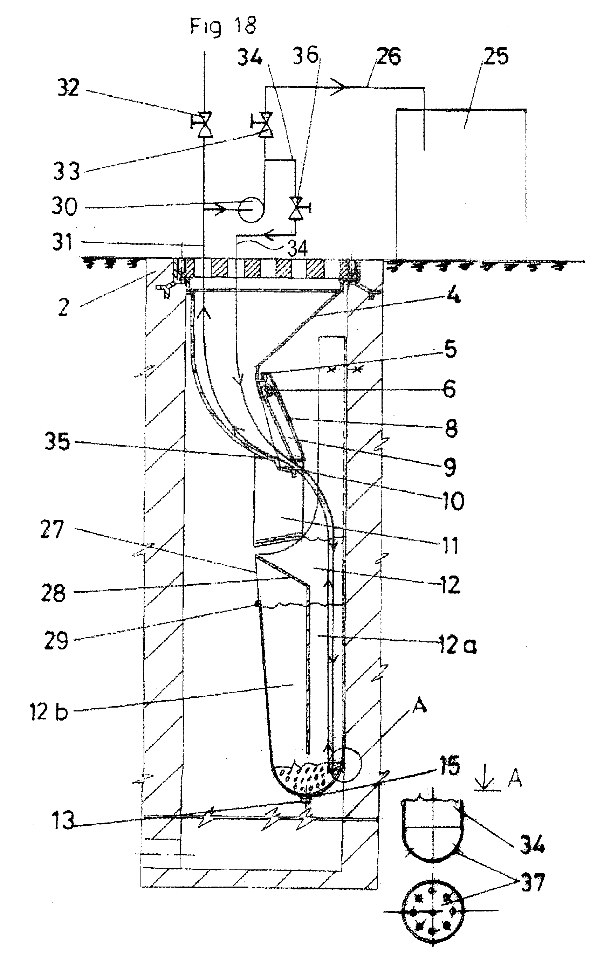

Fig. 18 is a schematic view illustrating the extraction of the collector tank.
Fig. 19 is a schematic side view of an exemplary sludge pump.
Fig. 20a is a top view of another embodiment employed in drain shafts with a vertical opening.
Fig. 20b is a front vie of the embodiment according to Fig. 20a.
Fig. 20c is a cross-sectional side view of the embodiment according to Fig. 20a.
Fig. 20d is a front view of the valve house fitting.
Fig. 20e is a cross-sectional side view of the valve house fitting according to Fig. 20d showing the supporting axle bore hole and the valve house fixing bore holes.
Fig. 20f is a front view of the clack valve.
Fig. 20g is a side view of the clack valve.
Fig. 20h is a cross-sectional side view of the valve house fitting in the mounted position with open clack valve.
Fig. 20i is a side view of the supporting axle of the clack valve.
Fig. 20j is a front view of the supporting axle of the clack valve.
   cross-sectional side-view of an exemplary embodiment of the drain shaft assembly according to the invention wherein the dual valve system of the shut-off device is in the closed position.

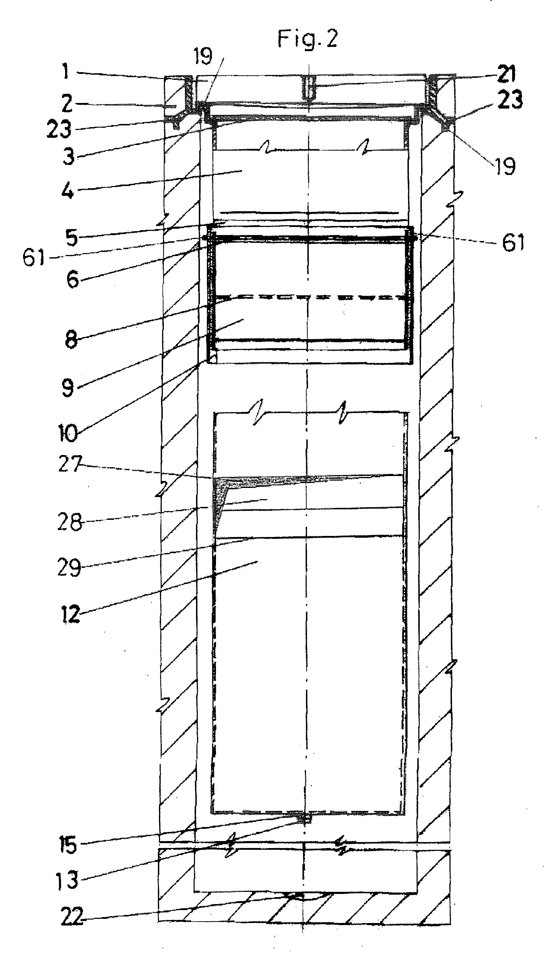

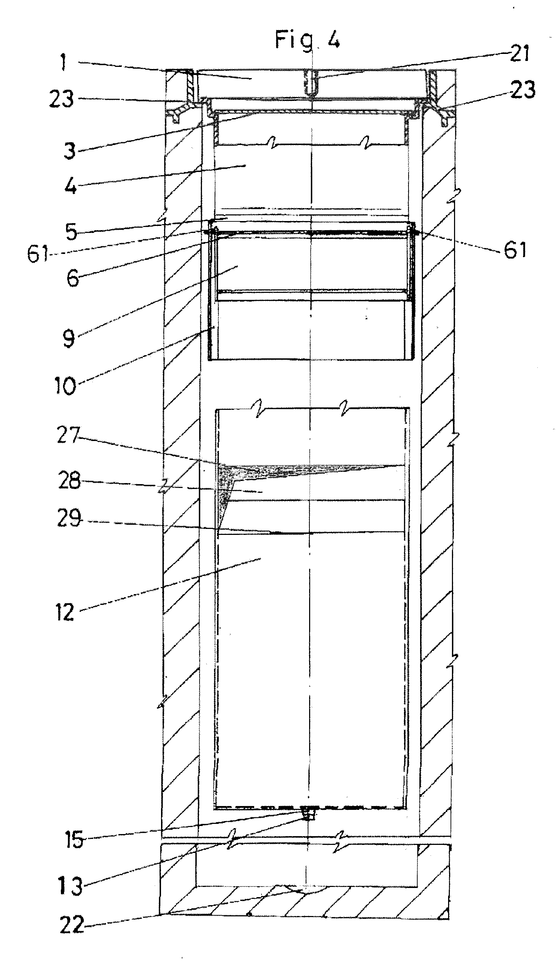

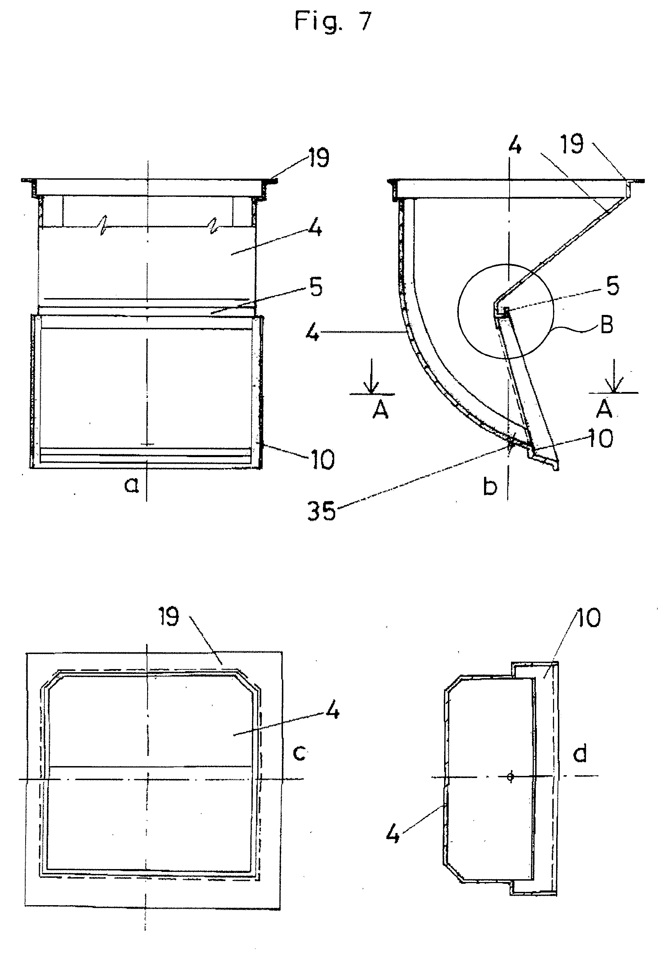

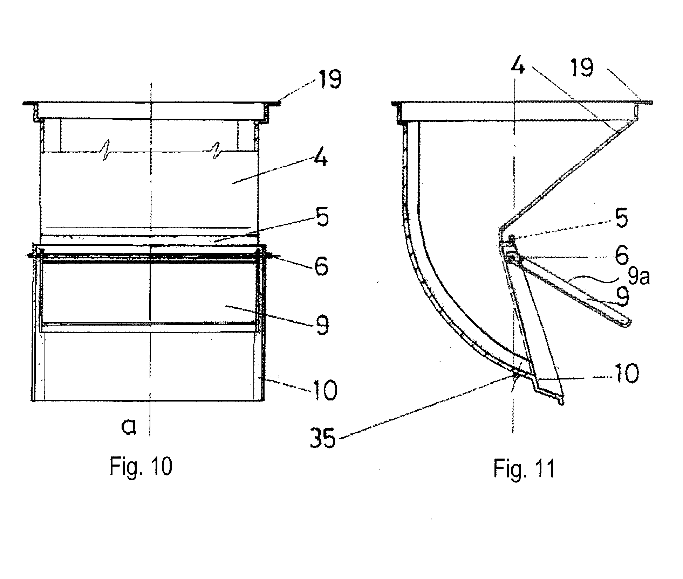

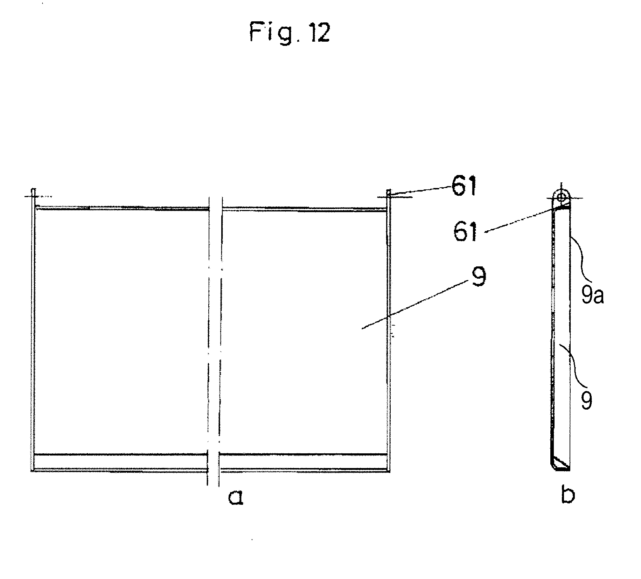

Figs. 1 to 13 show the components of an advantageous embodiment of the drain shaft assembly 300 according to the invention for drain shafts 302. The drain shaft assembly 300 comprises a drain shaft 302 of a rectangular cross-section that is in communication with a sewage drain 304 and comprises an upper drain shaft opening 306 that is in communication with the outside 308. The drain shaft 302 has a flow bottom 22 and a drainage vent 24 adjacent the flow bottom 22 for draining off sewage water.

The drain shaft assembly 300 depicted in Fig. 1 comprises a shut-off device 100 arranged adjacent the drain shaft opening 306 and a U-shaped collector tank 12 arranged below the shut-off device 100 for collecting oil, sludge, chemicals, debris and other material that is preferably kept out of the sewage drain 304.

The shut-off device 100 according to the invention comprises an inlet fitting piece 4 and a dual valve system 200. The inlet fitting piece 4 is designed so as to make the course of rain and waste water vertical or at least sufficiently inclined to facilitate down flow of the water. The inlet fitting piece 4 comprises an upper opening 4a communicating with the outside 308 via the upper drain shaft opening 306 and terminates in a lower opening 4b that is surrounded by a valve seat 10. The lower opening 4b of the inlet fitting piece 4 and the valve seat 10 surrounding it define an inclined plane with an inclination angle preferably between 75 and 85 degrees as depicted in Fig1, whereby the lower opening 4b opens into the drain shaft 302 in a slightly upward direction. The upper portion 4c of the inlet fitting piece 4 above the lower opening 4b is preferably defined by an inclined wall 4d the angle of inclination being preferably between 30 and 60 degrees, which inclined wall 4d guides fluids and solids entering through the upper drain shaft opening 306 to the lower portion 4e of the inlet fitting piece 4 that terminates in the lower opening 4b. The opposite guiding wall 4f of the inlet fitting piece 4 is preferably curved in order to facilitate down flow of rain and waste water and any material carried therewith.

The inlet fitting piece 4 is preferably made of an inflammable material in order to protect the shut-off device 100 against burning cigarette ends that are often thrown down into drain shafts 302. The inflammable material can be stainless steel or polyester with fibreglass strengthening. The inner surface of the inlet fitting piece 4 is preferably smooth in order to hinder deposition of sludge or solid debris and in order to prevent rodents from climbing up (although rodents are kept out from this area by the clack valve 9 itself).

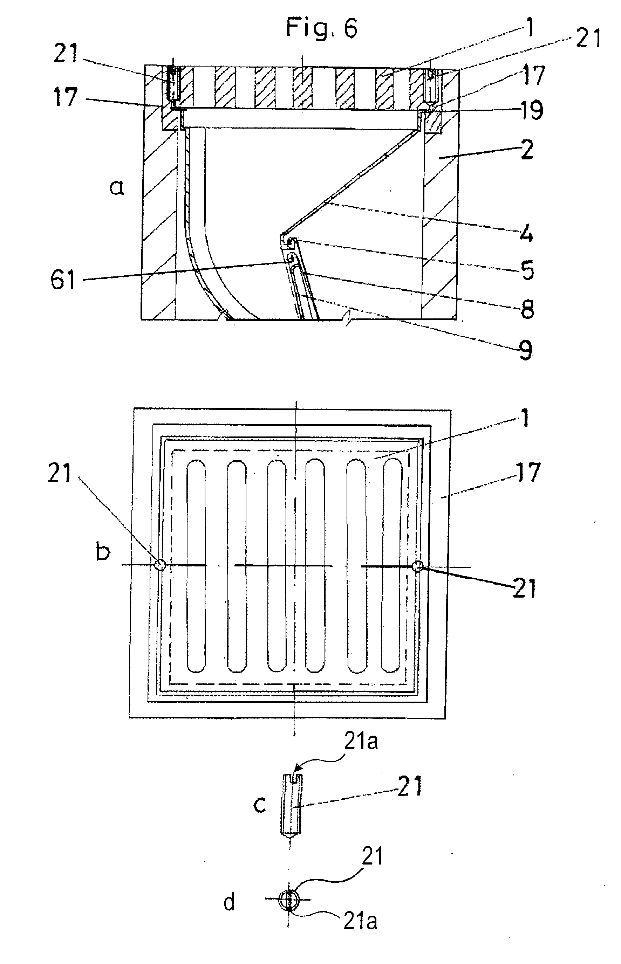

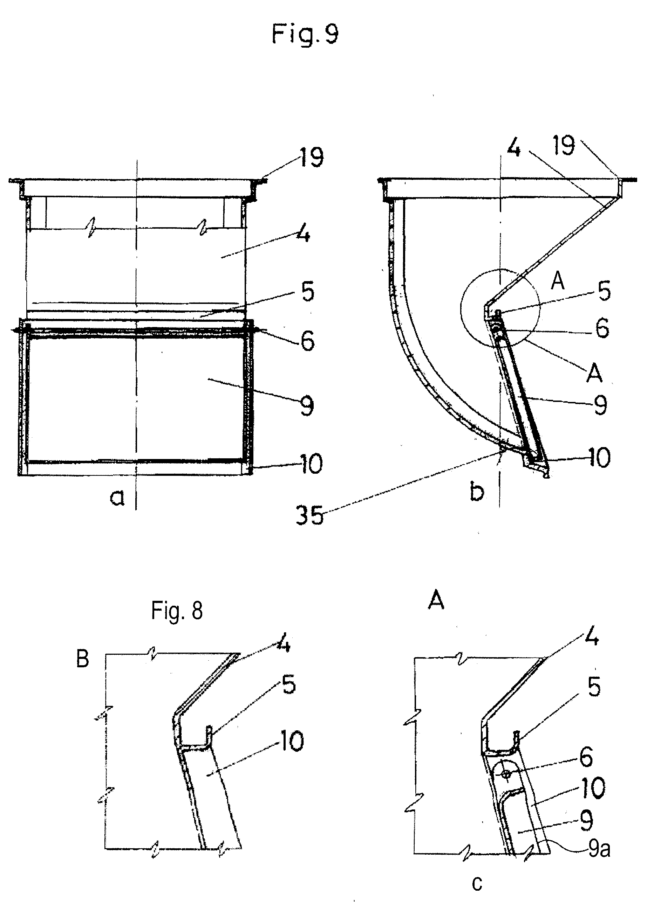

The first valve of the dual valve system 200 is a clack valve 9 that is rotateably mounted on the inlet fitting piece 4 above the valve seat 10. In order to allow the clack valve 9 to rotate it can be mounted on a supporting axle 6 that is held by a pair of supporting nibs 61 attaching the supporting axle 6 to the outside of the inlet fitting piece 4 just above the inclined lower opening 4b (see also Fig. 6a and Fig. 9c). Since the clack valve seat 10 is inclined slightly upwards the clack valve 9 is supported in a correspondingly inclined position by the valve seat 10 in the rest position (see Fig. 1).

The clack valve 9 is preferably made of an inflammable material as well in order to withstand burning cigarettes or the like should they be thrown down through the upper drain shaft opening 306 when there is no water therein to extinguish the burning cigarette. The clack valve 9 also prevents burning cigarettes from falling down to the flexible shut-off valve 11.

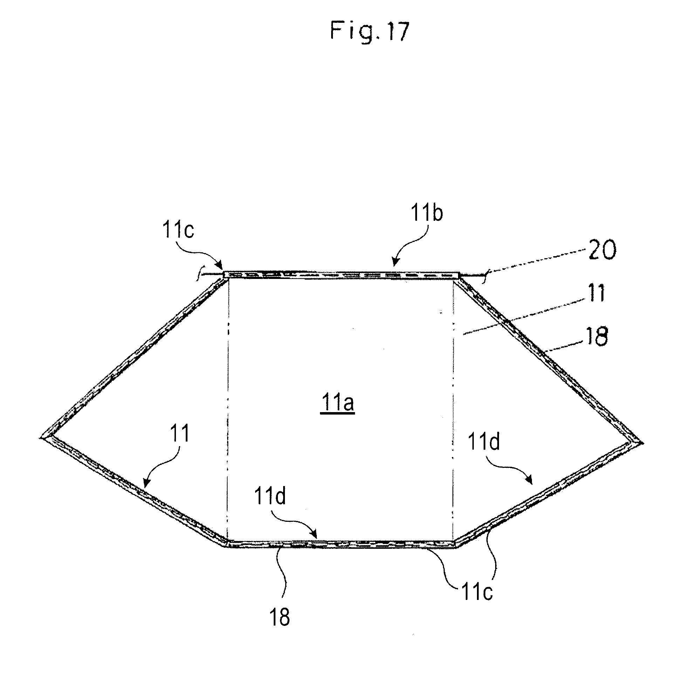

The dual valve system 200 further comprises a flexible shut-off valve 11 having a flexible material 11a such as densely woven polytextil (shown in unfolded state in Fig. 17) that has a greater surface area than the upper surface 9a of the clack valve 9 so as to overhang from the clack valve 9 when placed on its upper surface 9a as can be seen in Fig. 1. The upper side 11 b of the flexible material 11 a of the flexible shut-off valve 11 is affixed to the inlet fitting piece 4 above the supporting axle 6 of the clack valve 9 covering the upper edge of the clack valve seat 10 whereby odours are retained as well. The upper side 11 b of the flexible shut-off valve 11 can be retained within a supporting profile 5 via a fastening band clamp 56 that goes around the lower portion 4e of the inlet fitting piece 4 and is retained on the lower guiding wall 4f by a lower securing element 35 such as a pop rivet (see Fig. 1).

The upper side 11b of the flexible material 11a is preferably provided with an edge seam 11 c wherein a rubber or plastic cable 20 is located (see Fig. 17) that is positioned behind the clamp 56 whereby the upper side 11 b of the flexible shut-off valve 11 is prevented from slipping out.

The other sides (but at least the lower sides 11 d) of the flexible material 11a are provided with an auxiliary weight 18 preferably arranged within an edge seam 11c. The auxiliary weight 18 can be a chain or small pieces of separate weights.

When the upper side 11 b of the flexible shut-off valve 11 is retained in the supporting profile 5 the flexible shut-off valve 11 lies stretched out on the upper surface 9a of the clack valve 9 such that the lower sides 11 d of the flexible material 11 a that are provided with the auxiliary weight 18 hang down from the clack valve 9 whereby the weight of the auxiliary weight 18 gravitationally biases the clack valve 9 towards its rest position.

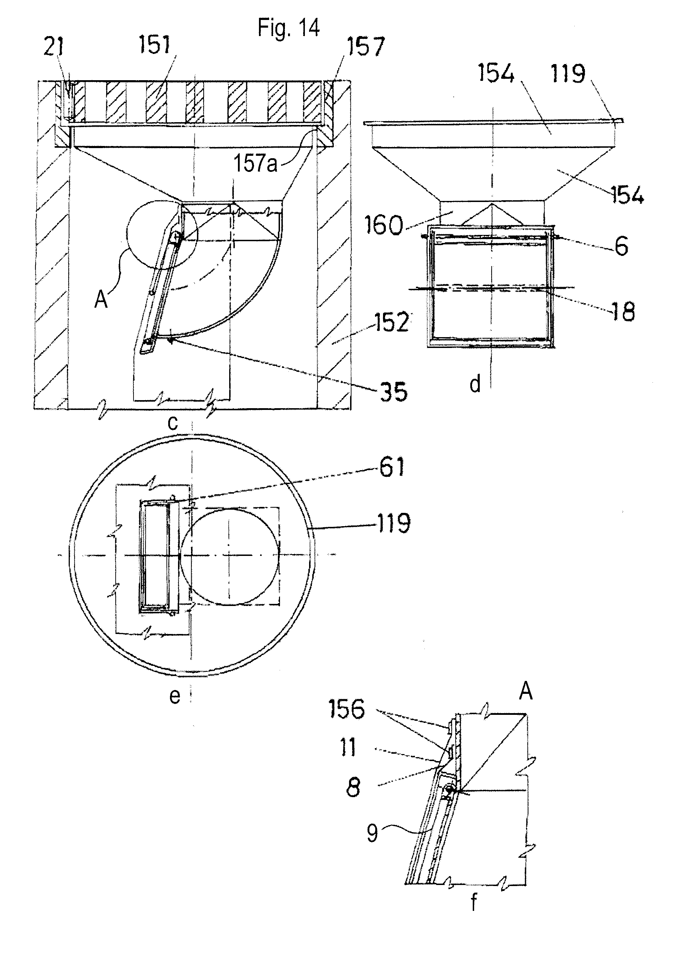

The dual valve system 200 preferably further comprises an opening force controller 8 that is mounted between the clack valve 9 and the flexible shut-off valve 11. An upper side 8b of the opening force controller 8 is affixed to the inlet fitting piece 4 adjacent the flexible shut-off valve 11 either on the same supporting profile 5 (Fig. 1) or via separate fixing means (Fig. 14f) positioned below the supporting profile 5. A lower side 8d of the opening force controller 8 is supported by the upper surface of the clack valve 9, whereby the weight of the opening force controller 8 biases the clack valve 9 towards the rest position in addition to the force exerted by the auxiliary weight 18 of the flexible shut-off valve 11. The opening force controller 8 may be of a flexible material 8a as well. The opening force controller 8 preferably terminates between the middle region and the lower end of the clack valve 9, more preferably the opening force controller 8 terminates adjacent the middle region of the upper surface 9a of the clack valve 9 as shown in Fig 1.

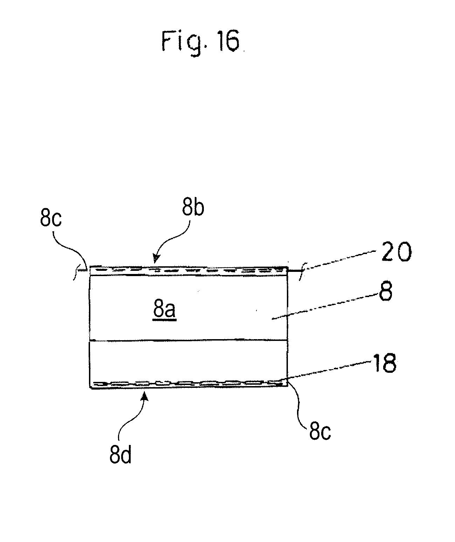

The opening force controller 8 is preferably provided with an auxiliary weight 18' as well at its lower side 8d. The lower side 8d may be formed with an edge seam 8c and the auxiliary weight 18' can be located within the edge seam (see Fig. 16). The auxiliary weight 18' can be a chain or small pieces of separate weights. By appropriate choice of the mass of the auxiliary weight 18' the force needed to open the clack valve 9 can be controlled. In particular, in case of close sewage drain networks wherein slight vacuum is maintained it is possible to enable the shut-off device 100 to extract smog and dust pollution occurring on road surfaces above the drain shaft opening 306 by appropriate choice of the auxiliary weight 18'.

Similarly to the fixing of the flexible shut-off valve 11, the opening force controller 8 may have an edge seam 8c at its upper side 8b as well and a rubber or plastic cable 20 can be reeved through the upper edge seam 8c in order to help prevent the upper side 8b from slipping out of the supporting profile 5 or other fastening means.

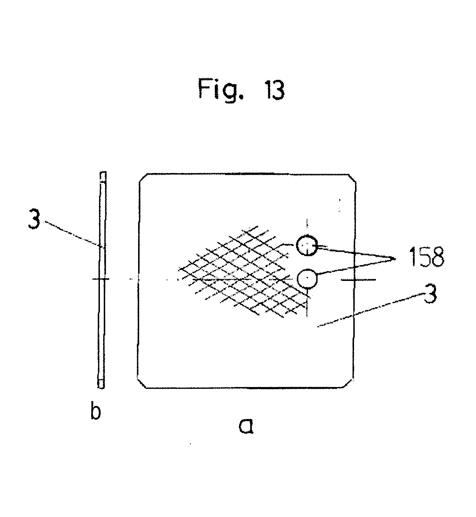

The inlet fitting piece 4 may be provided with a fine waste grill 3 covering its upper opening 4a in order to retain waste that is greater than the grill holes of the fine waste grill 3 (see Fig. 13a and 13b). The fine waste grill 3 is preferably provided with two bore holes 158 for allowing tools and tubes of a sludge pump to be inserted into the shut-off device 100 without having to remove the grate 1 and the fine waste grill 3 as will be explained later on.

The inlet fitting piece 4 preferably comprises an upper supporting collar 19 around its upper opening 4a that is seated on an inner shoulder 310 of the upper drain shaft opening 306. The inner side of the side wall 2 of the drain shaft opening 306 is preferably covered by a steel frame 17 that is fastened by a fastening claw 23. The steel frame 17 has a lower rim 17a that covers the shoulder 310 of the drain shaft opening 306. In this case the supporting collar 19 of the inlet fitting piece 4 rests on the rim 17a of the steel frame 17 covering the shoulder 310 of the upper drain shaft opening 306.

The drain shaft 302 preferably comprises a drain shaft cover in the form of a grate 1 which is also supported by the shoulder 310, whereby the upper supporting collar 19 of the inlet fitting piece 4 is located between the lower rim 17a of the steel frame 17 and the grate 1 and is held down by the grate 1.

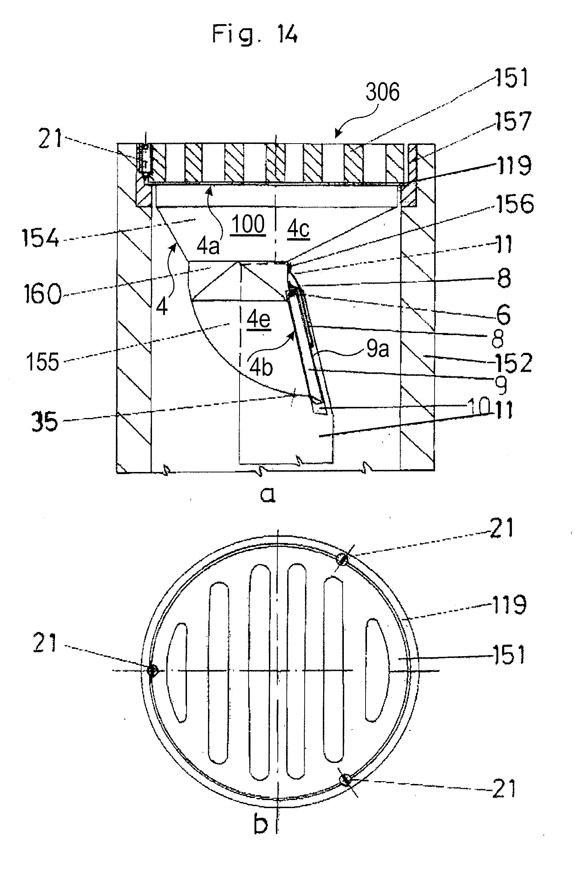

The grate 1 is preferably secured against flotation for the case of major gully swells that would force open the grate 1 together with the inlet fitting piece 4. The grate 1 is preferably secured to the steel frame 17 of the drain shaft opening 306 by at least two screw studs 21, preferably two to four screw studs 21 depending on the cross section of the drain shaft 302 and the shape of the grate 1. A circular grate 1 is preferably secured by at least three screw studs 21 as depicted in Fig. 14b, while a rectangular grate 1 could also be secured adequately by two screw studs 21 at two sides (see Fig. 6b) or by two corners or it may be secured by four screw studs 21 each at one side or one corner. The screw studs 21 typically have a transversal groove 21 a at their upper end as shown in Fig. 6c and 6d for screwing them in.

The grate 1 can be secured in any other known way as well, e.g. by two or three welds preferably of about 1 cm length each.

The screw studs 21 or other securing means are preferably disposable because they must be shattered when opening the grate 1, so they must be replaced with new ones from time to time.

The lower opening 4b of the inlet fitting piece 4 of the shut-off device 100 is positioned above the U-shaped collector tank 12. The U-shaped collector tank has a oil collecting first chamber 12a and a sewage water collecting second chamber 12b that are in fluid communication with each other through a common bottom portion 12c of the U-shaped collector tank 12. The lower opening 4b of the inlet fitting piece 4 and the collector tank 12 are positioned with respect to each other such that any material (e.g. rain water, sludge, oil, other waste liquids, debris) exiting the lower opening 4b of the shut-off device 100 enters the oil collecting chamber 12a of the collector tank 12.

The two chambers 12a and 12b are preferably adjacent to each other and are separated by a single chamber divider wall 28 along their whole height apart from the common bottom portion 12c.

The sewage water collecting chamber 12b comprises a sewage water exit window 27 at its upper region in order to allow discharge of the sewage water when it reaches a certain level in the collecting chamber 12b. A sewage water discharge profile 29 is preferably provided below the sewage water exit window 27 in order to protect the collector tank's 12 wall from calc formation that would otherwise be caused by the down pouring sewage water. For the same reason the side wall of the sewage water chamber 12b below the discharge profile 29 is preferably slightly inclined downwardly (by about 5 to 10 degrees, preferably by about 8 degrees)

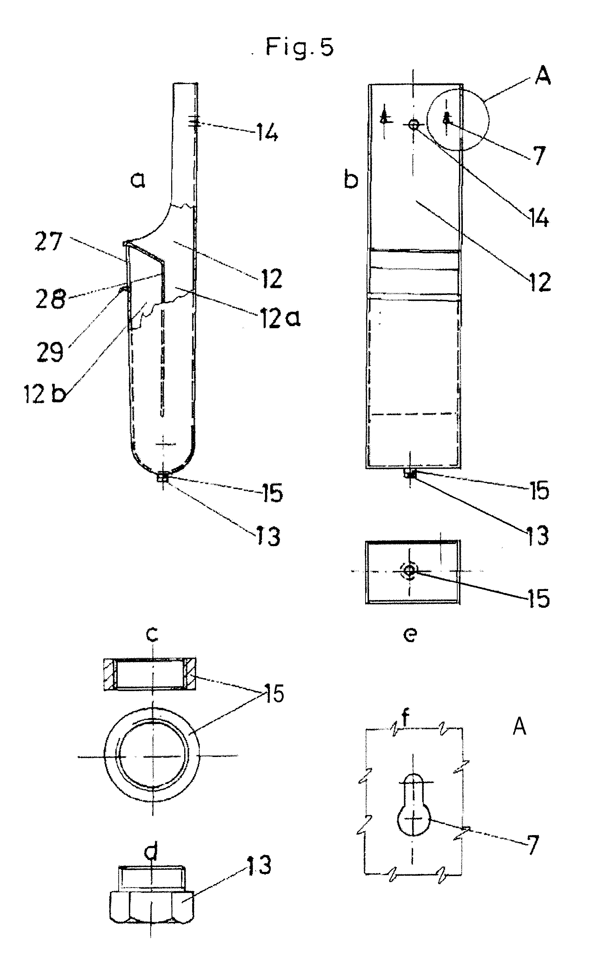

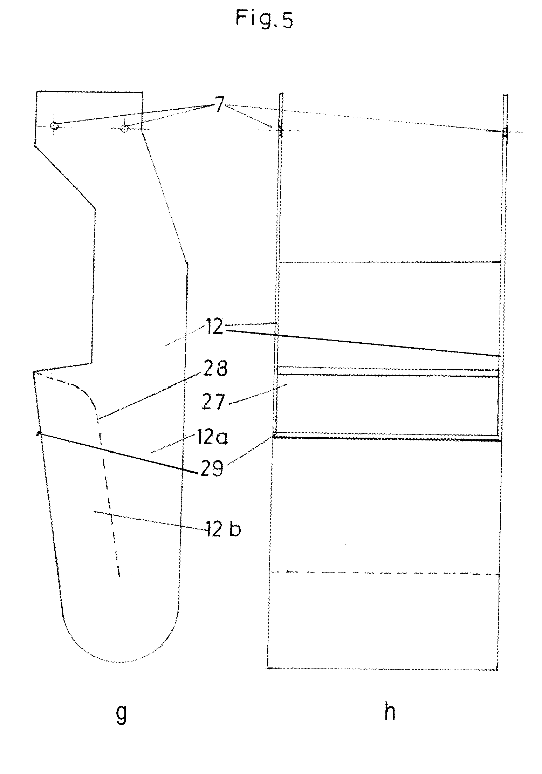

The collector tank 12 preferably comprises an outlet 15 at its common bottom portion 12c which is sealed off by a removable plug 13 or cap. The plug 13 or cap and the outlet 15 may be in a threaded connection (see Fig. 5b - 5e) or the plug 13 can be of a deformable material that can be fitted in the wall of the outlet 15.

The collector tank 12 is preferably removeably affixed to the inner wall 2 of the drain shaft 302 e.g. through mounting bore-holes 7 depicted in Fig. 5f. It is also possible to affix the collector tank 12 to the side of the inlet fitting piece 4 as depicted in Fig. 1a.

Figs. 14a - 14f illustrate another advantageous embodiment of the shut-off device 100 according to the invention which can be installed in a drain shaft 302 having a circular inner wall 152. Here the upper portion 4c of the inlet fitting piece 4 is defined by an asymmetrical circular drain body 154 that guides waste material into the lower portion 4e of the inlet fitting piece 4 that is formed as a curved duct 155 the end of which (comprising the lower opening 4b and the clack valve seat 10) is inclined slightly upwards. The drain body 154 and the curved duct 155 are connected by a cylindrical connecting portion 160.

In this embodiment the upper side 11b of the flexible shut-off valve 11 and the upper side 8b of the opening force controller 8 are affixed to the outer wall of the inlet fitting piece 4 spaced apart from each other via two fastening clamps 156 as can be seen in Fig. 14a, 14c and 14f.

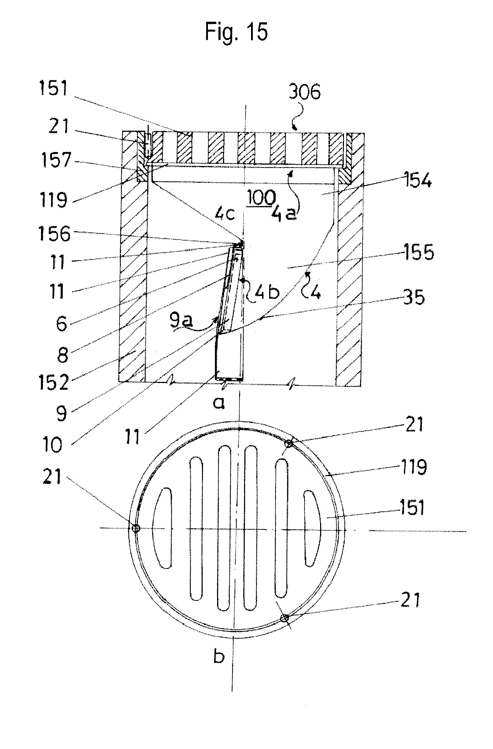

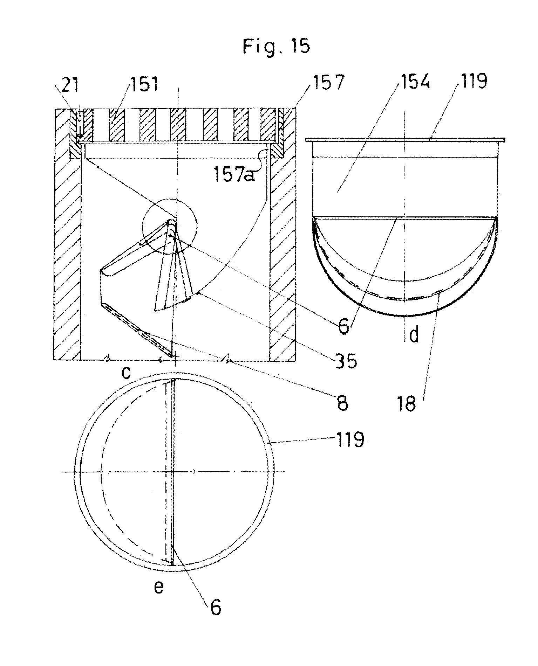

An alternative embodiment for a drain shaft 302 having a circular inner wall 152 is illustrated in Figs. 15a - 15e.

In case of the above embodiments due to the circular cross section of the wall 152, the steel frame 157 protecting the drain shaft opening 306 is also circular just as the collar 119 of the inlet fitting piece 4 that is supported by the circular rim 157a of the steel frame 157.

The grate 151 is also circular which covers the drain shaft opening 306 and which holds down the circular collar 119 of the inlet fitting piece 4 (see Fig. 14b).

Other elements of the circular shut-off device 100 and the circular drain shaft assembly 300 will be apparent in view of the description of the rectangular drain shaft assembly 300. In order to facilitate understanding, corresponding elements have been numbered with the same reference numerals.

The shut-off device 100 and the drain shaft assembly 300 according to the invention operate as follows.

During normal operation rain water, waste water and other waste material is washed down the grate 1, 151 that is placed at the upper opening 306 of the drain shaft 302 and enters the inlet fitting piece 4 at its upper opening 4a. If the inlet fitting piece 4 is equipped with a fine waste grill 3 then larger debris is retained thereon and only fluent material and fine debris gets into the upper portion 4c of the inlet fitting piece 4. From there the waste material is partly guided down to the lower portion 4e by the inclined wall 4d and partly falls down directly onto the lower guiding wall 4f of the inlet fitting piece 4. From here it flows/slides down to the lower opening 4b where it is retained by the clack valve 9 as long as the pressure exerted by the waste material on the clack valve 9 does not exceed the force exerted on the clack valve 9 by the flexible shut-off valve 11 that is pulled down by the auxiliary weight 18 and the force exerted by the opening force controller 8, furthermore the own weight of the clack valve 9 must be lifted as well. In case the drain system is under negative pressure through the drainage vent 24 very little or even no weight may suffice to open the clack valve 9 depending on the auxiliary weights 18 and 18' used on the flexible shut-off valve 11 and the opening force controller 8 as well as the negative pressure created within the dran shaft 302.

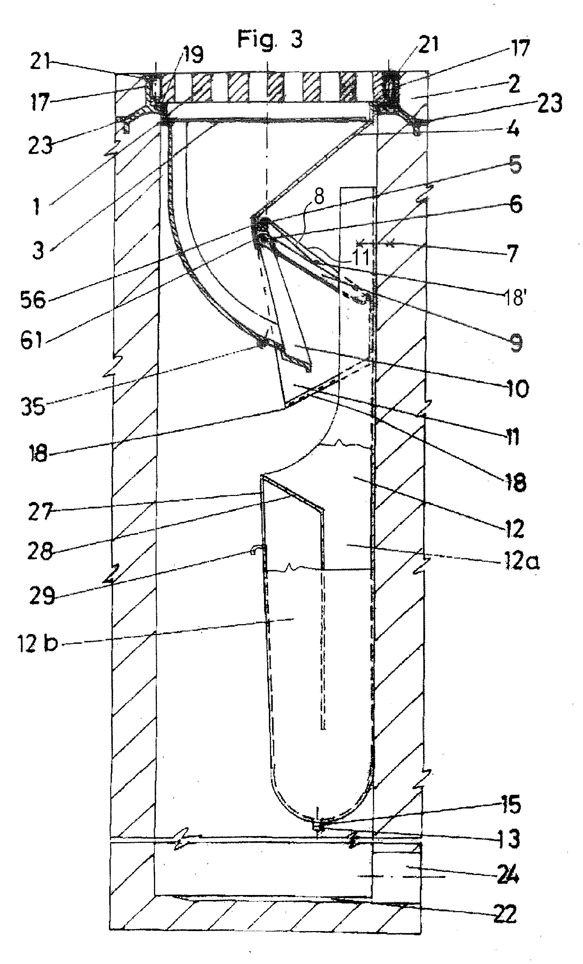

When the clack valve 9 opens the waste material flows/slides down the guiding wall 4f of the inlet fitting piece 4 and falls down into the oil collecting chamber 12a of the collecting tank 12 arranged below the shut-off device 100. Note, that the falling waste material does not come in contact with the flexible material 11 a of the flexible shut-off valve 11 which overhangs from the clack valve 9 thus forming a rectangular half tube below the clack valve 9 as best illustrated in Fig. 3. This way the flexible material 11 a is protected from the waste material that may even contain burning cigarettes.

In the collector tank 12 sludge, debris and other solid waste that has a greater density than water sinks to the bottom portion 12c of the U-shaped collector tank 12. Oil, oil derivatives, sulphur bonded to it that are dissolved from the asphalt of roads and other waste material that are lighter than water remain above the water level and thus become trapped in the oil collection chamber 12a while waste water (sewage water) fills up the bottom portion 12c and the lower portions of the two chambers 12a and 12b. The yearly amount of oil and oil derivates that can be collected in the oil collecting chamber 12a in a stormwater drain shaft 302 on a road with average traffic is about 0.05 - 0.1 I (without accidents involving oil spills).

As the sewage water level rises in the sewage water chamber 12b it eventually reaches the height of the sewage water exit window 27, overflows it and flows down the discharge profile 29 whereby sewage water is discharge into the sewage drain 304, while sludge and oils are retained in the collector tank 12.

The shut-off device 100 further provides for the interception of rodents and insects by preventing them from getting through the drain shaft opening 306 and thereby into the human environment on the outside 308. This is achieved by the fact that the clack valve 9 and the flexible shut-off valve 11 can only be opened from the inside of the inlet fitting piece 4 using appropriate tools. The arched shape and smooth inner surface of the inlet fitting piece 4 further contribute to keeping rodents within the drain shaft 302.

A further function of the shut-off device 100 is that it prevents outflow of the sewage water in case of gully-swells and over-fills (due to e.g. heavy precipitation). Prior art drain shafts allow sewage water to burst out through the drain shaft opening into the outside. The inventive shut-off device 100 prevents this via the clack valve 9 which is pressed against the valve seat 10 by the hydrostatic pressure of the rising sewage water (as well as the flexible shut-off valve 11 and the opening force controller 8).

The cleaning of the collector tank 12 can be performed manually or by a sludge pump. Manual cleaning can be performed by opening the grate 1 removing the shut-off device 100 and dismounting the tank 12 from the side wall 2 of the drain shaft 302. The collector tank 12 can then be lifted out, emptied and cleaned. When reinstalling the collector tank 12 a small amount of water should be filled in so as to fill out the common bottom portion 12c in order to prohibit any oil or other dangerous waste material that is lighter than water from getting into the sewage water chamber 12b.

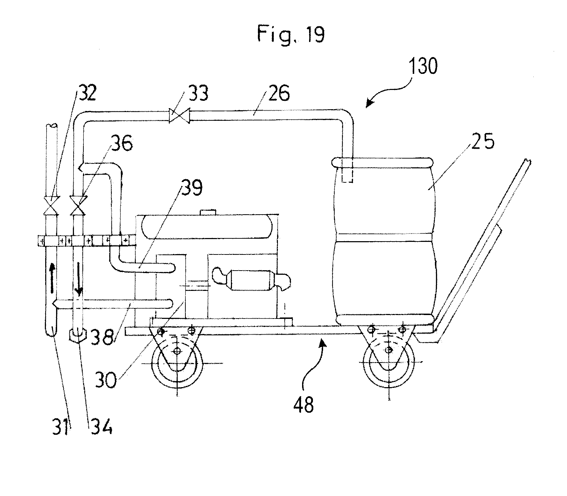

A more efficient way of maintenance is to clean the collector tank 12 by a sludge pump. Conventional, commercially available sludge pumps can be used. Fig. 19 illustrates an exemplary pump assembly 130 that is suitable for performing the cleaning operation of the U-shaped collector tank 12 and which can be conveniently mounted on a hand cart 48. The pump assembly 130 comprises a sludge pump 30 connected to a tank 25 via a pipe 39 and a pipe 26 along which a valve 33 is arranged for closing the pipe 26. The sludge pump 30 is further connected to a suction tube 31 and a washing tube 34. The suction tube 31 can be closed off at one end by valve 32 in order to allow the sludge pump 30 to exert sucking force at the other end of the suction tube 31 through connecting pipe 38. The fluid communication between the washing tube 34 and the sludge pump 30 can be interrupted by a valve 36. When the valve 36 is open the washing tube 34 communicates with the sludge pump 30 through the pipe 39. The valves 32, 33, 34 can be common ball valves.

The clack valve 9 is lifted with an appropriate opening tool and the flexible suction tube 31 and the flexible washing tube 34 connected to the sludge pump 31 are inserted into the oil collection chamber 12a of the collector tank 12 through the grate 1 and the lower opening 4b of the inlet fitting piece 4. In case a fine waste grill 3 is employed the fine waste grill 3 is preferably provided with two bore holes 158 (see Fig. 13a) which allow the suction tube 31 and the washing tube 34 to be inserted into the shut-off device 100 without having to remove the grate 1 and the fine waste grill 3. The bore hole 158 of the fine waste grill 3 is also used to insert the opening tool initially, in order to open the clack valve 9.

The suction tube 31 is preferably inserted down to the lower third of the oil collection chamber 12a and the washing tube 34 is led down beside it into the sludge deposited in the common bottom portion 12c. The valve 32 and 33 are shut and the valve 36 is opened and the sludge pump 30 is started. The sludge pump 30 draws up water through the suction tube 31 and pumps it back through the washing tube 34 into the sludge thereby loosening it up. The process can be further enhanced by moving the lower end of the washing tube 34 thereby agitating the sludge as well. Preferably a sludge loosening cleaning head 37 is provided at the end of the washing tube 34 for this purpose. When the sludge has been sufficiently loosened up the valve 33 is opened and valve 36 is closed whereby the sludge pump 30 pumps the sludge out of the bottom portion 12c of the collector tank 12 through the suction tube 31 into the tank 25 where the sludge, debris and other dangerous waste is collected. By lifting the end of the suction tube 31 oil and other light liquids captured above the water level of the oil collection chamber 12a can be drawn up as well.

When the cleaning process is finished the opening tool is used again to open the clack valve 9 for pulling up the suction tube 31 and the washing tube 34.

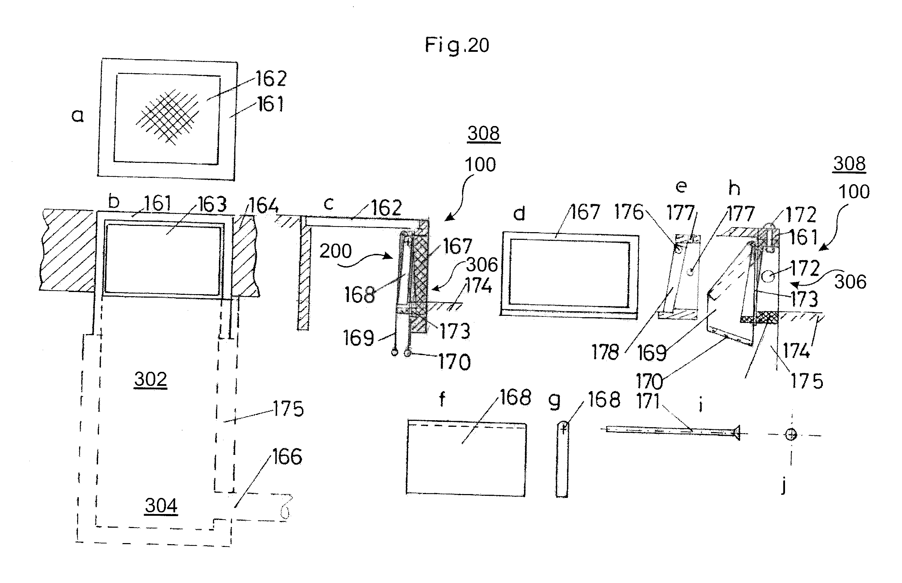

The invention has been described with reference to embodiments that are used in drain shafts 302 having a horizontal upper drain shaft opening 306, however it is also possible to provide the inventive shut-off device 100 for a drain shaft 302 wherein the upper drain shaft opening 163 is vertical (see Fig. 20a-20j), e.g. in case when the drain shaft 302 is built below the pavement 164 such that the upper opening 163 is formed in a vertical inlet body 161 (preferably cast iron) that is placed in the side wall of the pavement 164 (facing the road 174 that is adjacent the pavement). The drain shaft 302 preferably comprises a removable horizontal lid 162 inside the pavement 164. The drain shaft 302 has a lower drainage vent 166 inside its concrete wall 175 similarly to the other embodiments. In this case the vertical drain shaft opening 163 houses a vertical inlet fitting piece 167 (that is preferably made of plastic material) having a valve seat 178 and a dual valve system 200 which comprises a vertical clack valve 168 and a flexible valve 169. The flexible valve 169 is maintained in the vertically hanging position by means of auxiliary weights 170 and flexible valve fixing band 173. The clack valve 168 is mounted on a supporting axle 171 that is retained in the axle bore holes 176. The plastic inlet fitting piece 167 is preferably held by pop rivets 172 that are inserted into valve house fixing bore holes 177 (see Fig. 20e).

The same type of U-shaped collector tank 12 (not shown) can be used as described earlier.

The present type of embodiment applied in drain shafts 302 with vertical drain shaft opening 163 can be operated and cleaned in a corresponding way as has been described earlier.

The above-described embodiments are intended only as illustrating examples and are not to be considered as limiting the invention. Various modifications will be apparent to a person skilled in the art without departing from the scope of protection determined by the attached claims.

## Claims

1. Shut-off device (100) especially for sewage drains, **characterised in that** the device has an inlet fitting piece (4, 167) and a dual valve system (200), the inlet fitting piece (4, 167) comprises a valve seat (10, 178), the first valve of the dual valve system (200) is a clack valve (9, 168) that is rotateably mounted on the inlet fitting piece (4, 167) above the valve seat (10, 178) such that the clack valve (9, 16) rests in an inclined or vertical position against the valve seat (10, 178) in the rest position, the dual valve system (200) further comprises a flexible shut-off valve (11, 169) comprising a flexible material (11a) having a larger surface than an upper surface (9a) of the clack valve (9), a lower side (11 d) of the flexible material (11a) is provided with auxiliary weight (18) and the upper side (11b) of the flexible material (11a) is affixed to the inlet fitting piece (4, 167) above the clack valve (9, 168) whereby the lower side (11d) of the flexible material (11a) provided with the auxiliary weight (18) hangs down from the clack valve (9, 168) and biases the clack valve (9, 168) towards the rest position.

2. The shut-off device according to claim 1, wherein the dual valve system (200) further comprises an opening force controller (8) mounted between the clack valve (9) and the flexible shut-off valve (11), the upper side (8b) of the opening force controller (8) is affixed to the inlet fitting piece (4), and the lower side (8d) of the opening force controller (8) is supported by the upper surface (9a) of the clack valve (9), whereby the weight of the opening force controller (8) biases the clack valve (9) towards the rest position.

3. The shut-off device according to claim 2, wherein the opening force controller (8) is provided with an auxiliary weight (18'), which contributes to biasing the clack valve (9) towards the rest position and the auxiliary weight (18') is preferably located between the middle region and the lower end of the clack valve (9), more preferably the auxiliary weight is located adjacent the middle region of the clack valve (9).

4. The shut-off device according to any of claims 1 to 3, wherein the auxiliary weight (18 and/or 18') is a chain or small pieces of weights that are contained in an edge seam (11c and/or 8c).

5. The shut-off device according to any of claims 1 to 4, wherein the clack valve (9, 168) is made of an inflammable material and the flexible shut-off valve (11, 169) is made of a densely woven polytextil or other densely woven material.

6. The shut-off device according to any of claims 1 to 5, wherein the inlet fitting piece (4) is provided with a fine waste grill (3) covering its upper opening (4a).

7. The shut-off device according to any of claims 1 to 5, wherein the valve seat (10, 178) of the inlet fitting piece (4, 167) is positioned above a collector tank (12) having a first chamber (12a) and a second chamber (12b) that are in fluid communication with each other through a bottom portion (12c) of the collector tank (12) and the second chamber (12b) comprises a sewage water exit window (27) and the shut-off device (100) is positioned such that any material entering through the valve seat (10, 178) of the inlet fitting piece (4, 167) enters the first chamber (12a) of the collector tank (12).

8. Drain shaft assembly (300) comprising a drain shaft (302) being in communication with a sewage drain (304) and an upper drain shaft opening (306) being in communication with the outside (308), **characterised by** comprising a shut-off device (100) according to any of claims 1 to 6.

9. The drain shaft assembly according to claim 8, wherein a collector tank (12) is arranged inside the drain shaft (302), the collector tank (12) has a first chamber (12a) and a second chamber (12b) that are in fluid communication with each other through a bottom portion (12c) of the collector tank (12c), and the second chamber (12b) comprises a sewage water exit window (27) opening into the drain shaft (302), and the collector tank (12) is positioned with respect to the valve seat (10, 178) of the inlet fitting piece (4) of the shut-off device (100) such that any material entering through the valve seat (10, 178) enters the first chamber (12a) of the collector tank (12).

10. The drain shaft assembly according to claim 9, wherein the collector tank (12) is removeably affixed to the inner wall (2) of the drain shaft (302) or to the inlet fitting piece (4) and the collector tank (12) preferably has an outlet (15) at its bottom portion (12c) which is sealed off by a removable plug (13) or cap.

11. The drain shaft assembly according to claim 9 or 10, wherein a sewage water discharge profile (29) is provided below the sewage water exit window (27) and preferably the wall of the second chamber (12b) is inclined downwardly.

12. The drain shaft assembly according to any of claims 9 to 11, wherein the inlet fitting piece (4) comprises an upper collar (19, 119) around its upper opening (4a) that is seated on an inner shoulder (310) of the upper drain shaft opening (306).

13. The drain shaft assembly according to claim 12, wherein the inner wall (2) of the drain shaft opening (306) is covered by a steel frame (17, 157) having a lower rim (17a) covering the shoulder (310) of the drain shaft opening (306) and the drain shaft (302) comprises a drain shaft cover, preferably in the form of a grate (1, 151) which is supported by the shoulder (310) such that the upper collar (19) of the inlet fitting piece (4) is located between the lower rim (17a) of the steel frame (157) and the drain shaft cover.

14. The drain shaft assembly according to claim 13, wherein the drain shaft cover is secured to the steel frame (157) of the drain shaft opening (306) by at least two screw studs (21), preferably two to four screw studs (21).

15. The drain shaft assembly according to any of claims 9 to 14, wherein the drain shaft (302) is of a circular or of a rectangular cross section and the upper drain shaft opening 306 is horizontal or vertical.
